# EUROPÄISCHE PATENTSCHRIFT

(11) **EP 1 826 077 B1**
(45) Veröffentlichungstag und Bekanntmachung des Hinweises auf die Patenterteilung: **02.12.2009**
(21) Anmeldenummer: 07002244.7
(22) Anmeldetag: 02.02.2007
(51) Int. Cl.: B60R 25/04, E05B 65/12, H01H 13/56

(54) **Zündschloss mit verbesserter Manipulationssicherheit**
Ignition switch with improved manipulation safety
Interrupteur d'allumage doté d'une sécurité de manipulation améliorée

(30) Priorität: 24.02.2006 DE 102006008625
(43) Veröffentlichungstag der Anmeldung: 29.08.2007
(73) Patentinhaber: Volkswagen Aktiengesellschaft, 38436 Wolfsburg (DE); Marquardt GmbH, 78604 Rietheim-Weilheim (DE)
(72) Erfinder: Borngräber, Ralf, 38165 Lehre (DE); Schwarz, Thomas, 78628 Wurmlingen (DE); Meßmer, Dennis, 78647 Trossingen (DE); Messner, Bernd, 78647 Trossingen (DE); Frohne, Hans-Joachim, 38165 Lehre (DE)

(56) Entgegenhaltungen:
- EP-A1- 1 419 944
- EP-A2- 1 279 576
- DE-A1- 10 335 478

## Beschreibung

Die Erfindung betrifft ein Zündschloss gemäß dem Oberbegriff des Anspruchs 1.

Im gattungsbildenden Stand der Technik sind Zündschlösser bekannt, in die ein ID-Geber eingeführt wird. Weist der ID-Geber eine erste Zugehörigkeit zu einem Aufnahmeelement des Zündschlosses auf, so kann das Aufnahmeelement mit dem ID-Geber aus einer Grundstellung in eine ausgelenkte Stellung bewegt werden, Die erste Zugehörigkeit ist meist als mechanische Zugehörigkeit ausgebildet. Dieses bedeutet, dass der ID-Geber mechanisch zu dem Aufnahmeelement passt. In der ausgelenkten Stellung ist der ID-Geber in der Aufnahmevorrichtung verriegelt. In der ausgelenkten Stellung kann der ID-Geber beziehungsweise das Aufnahmeelement In unterschiedliche Schaltstellungen bewegt werden, an denen Schaltkontakte geschlossen oder geöffnet werden. Die Schaltstellungen werden entsprechend einer Klemme oder eines Kontakts bezeichnet, der bei einer Bewegung In der jeweiligen Schaltstellung geschlossen wird oder ist. Dass das Öffnen oder Schließen tatsächlich ausgeführt wird, kann noch von einer zweien Zugehörigkeit des ID-Gebers zu dem Zündschloss oder dem Aufnahmeelement abhängig gemacht werden. Hierzu wird in der Regel eine codierte Kennung aus dem ID-Geber ausgelesen und elektronisch verarbeitet. Diese Vorgänge sind dem Fachmann bekannt und werden hier daher nicht näher erläutert.

Die EP 1 279 576 A2 offenbart ein Zündschlosssystem für ein Kraftfahrzeug mit einem elektronischen Schlüssel und mit einem elektronischen Zündschloss. Das Zündschloss weist eine In einem Trägerelement befindliche Aufnahme für den Schlüssel auf. Das Trägerelement ist in der Art eines Schiebers mittels des Schlüssels zwischen einer Ausgangsstellung und wenigstens einer Bewegungsstellung manuell linear bewegbar, wobei die Bewegungsstellung für das Trägerelement als Raststellung ausgebildet ist. Die Raststellung ist durch das Zusammenwirken einer in der Art eines Schaltherzens ausgestalteten Rastkurve mit einem in die Rastkurve eingreifenden, mit einer elastischen Kraft beaufschlagten Raststift festgelegt.

Bei einem Kraftfahrzeug umfassen die Schaltstellungen die S-Kontakt-Stellung, Klemme-15-Stellung, Klemme-50-Stellung und die Klemme-15-Fahrt-Stellung. Zunächst wird der S-Kontakt geschlossen, so dass elektrische Verbraucher Im Fahrzeug, beispielsweise ein Radio, mit elektrischer Energie versorgt werden. Ist die Klemme 15 aktiviert, so wird die Zündung des Kraftfahrzeugs aktiviert. Wird der ID-Geber weiter In das Zündschloss eingeführt, so gelangt das Aufnahmeelement in die Klemme-50-Stellung, In der eine Antriebsvorrichtung des Fahrzeugs aktiviert wird. Das Zündschloss ist so ausgestaltet, dass das Aufnahmeelement anschießend in eine Klemme-15-Fahrt-Stellung gelangt. Aus der Klemme-15-Fahrt-Stellung kann das Aufnahmeelement mit dem ID-Geber in die S-Kontakt-Stellung bewegt werden. Während sich das Aufnahmeelement nicht in der Grundstellung befindet, ist der ID-Geber ohne eine Anwendung von Gewalt nicht aus dem Aufnahmeelement entnehmbar.

Hierzu umfasst das Aufnahmeelement mindestens einen Rastschieber, der in einer Grundstellung, des Aufnahmeelements beim Einführen eines ID-Gebers in das Zündschloss zumindest teilweise aus dem Aufnahmeelement austritt und in eine Vorrastaussparung in dem Gehäuse eingreift. Weist der ID-Geber eine Zugehörigkeit erster Art mit dem Zündschloss auf, so verrastet der mindestens eine Rastschieber den ID-Geber in dem Aufnahmeelement. In der verrasteten Stellung greift der mindestens eine Rastschieber nicht mehr in die Vorrastaussparung des Gehäuses. Wird der ID-Geber weiter in das Zündschloss geschoben, so bewegt sich das Aufnahmeelement mit dem darin verrasteten ID-Geber aus der Grundstellung in einen Auslenkungsbereich. Im Auslenkungsbereich ist das Gehäuse so gestaltet, dass der mindestens eine Rastschieber nicht aus dem Aufnahmeelement austreten kann, was erforderlich wäre, um den ID-Geber wieder frei zu geben.

In der Regel sind Zündschlösser dieser Art so ausgebildet, dass das Aufnahmeelement derart mit einem Vorspannelement gekoppelt ist, dass eine Auslenkung über die Stellung S-Kontakt. hinaus zu einem Vorspannen des Vorspannelements führt. Dieses Vorspannelement versucht im vorgespannten Zustand, das Aufnahmeelement wieder in die Stellung S-Kontakt zu bewegen. Das Vorspannelement ist vorzugsweise als Druckfeder ausgebildet. Am Ende eines Bedienvorgangs wird das Aufnahmeelement mittels des Vorspannelements somit in die S-Kontakt-Stellung bewegt. Um den ID-Geber aus dem Aufnahmeelement anschließend entnehmen zu können, muss das Aufnahmeelement in die Grundstellung mittels des verrasteten ID-Gebers zurückgezogen werden. Nur in der Grundstellung ist der ID-Geber aus dem Aufnahmeelement entnehmbar.

Zerrt ein Nutzer jedoch an dem ID-Geber mit sehr hoher Kraft, während sich das Aufnahmeelement in dem Auslenkungsbereich befindet und eine Rückführung des Aufnahmeelements in die Grundstellung, beispielsweise durch eine gesondert ausgebildete Zündschlüsselabzugssperre, unterbunden ist, so kann es bei den Zündschlössern nach dem Stand der Technik vorkommen, dass das Gehäuse den auftretenden Kräften nicht Stand hält und elastisch vor dem aus dem Aufnahmeelement herausdrängenden mindestens einen Rastschieber ausweicht, so dass der ID-Geber freigegeben wird. Das Aufnahmeelement kehrt in einem solchen Fall höchstens bis in die Stellung S-Kontakt zurück. Ein erneutes Einführen in das Aufnahmeelement scheitert, da der mindestens eine Rastschieber im Auslenkungsbereich nicht aus dem Aufnahmeelement austreten kann, was erforderlich ist, um den ID-Geber für ein Verrasten aufzunehmen. Das Aufnahmeelement weicht als Ganzes vor dem ID-Geber zurück.

Das Zündschloss kann erst wieder korrekt benutzt werden, wenn das Aufnahmeelement in die Grundstellung zurückgezogen wurde.

Eine ähnliche Problematik tritt bei Zündschlössern auf, die gezielt manipuliert werden.
Da sich diese Problematik Nutzern nicht erschließt, können sie das Fahrzeug nicht mehr benutzen, bis sie professionelle Hilfe erhalten haben, sobald eine oben beschriebene Fehlbenutzung aufgetreten ist.

Auch wenn dieser Zustand nur bei nicht sachgerechtem Gebrauch eintritt, besteht ein Bedarf ein verbessertes, vorzugsweise elektronisches Zündschloss zu schaffen, das die oben erwähnten Probleme nicht aufweist und manipulationssicherer ist.

Der Erfindung liegt somit die technische Aufgabe zugrunde, ein Zündschloss mit verbesserter Manipulationssicherheit zu schaffen, das insbesondere ein Einführen des ID-Gebers auch nach einer Fehlbenutzung gestattet.

Die Aufgabe wird erfindungsgemäß durch ein Zündschloss mit den Merkmalen des Patentanspruchs 1 gelöst. Vorteilhafte Ausführungsformen sind in den Unteransprüchen angegeben.

Erfindungsgemäß ist bei einem Zündschloss nach dem Oberbegriff des Patentanspruchs 1 vorgesehen, dass in dem Gehäuse mindestens eine weitere Rastaussparung vorgesehen ist, so dass der mindestens eine Rastschieber in einer ausgezeichneten ausgelenkten Stellung des ID-Geber-Aufnahmeelements innerhalb des Auslenkungsbereichs zum Aufnehmen des ID-Gebers in die mindestens eine weitere Rastaussparung zumindest teilweise eingreifen kann. Hierdurch wird sichergestellt, dass der lD-Geber auch nach einer Fehlbenutzung oder Manipulation erfolgreich in das Zündschloss eingeführt und verrastet werden kann. Während bei den Zündschlössern nach dem Stand der Technik nach einer Fehlbedienung das ID-Geber-Aufnahmeelement von dem ID-Geber lediglich vor dem ID-Geber her bewegt wird, wird das ID-Geber-Aufnahmeelement erfindungsgemäß nur bis zu der ausgezeichneten ausgelenkten Stellung vor dem ID-Geber her bewegt. Befindet sich das ID-Geber-Aufnahmeelement in der ausgezeichneten ausgelenkten Stellung, kann der mindestens eine Rastschieber aus dem ID-Geber-Aufnahmeelement austreten und in die weitere Rastaussparung des Gehäuses eingreifen. Der ID-Geber, der eine Zugehörigkeit erster Art zu dem Zündschloss aufweist, wird in dem ID-Geber-Aufnahmeelement korrekt verrastet. Anschließend kann das Zündschloss bestimmungsgemäß mit dem ID-Geber verwendet werden. Obwohl der Nutzer bei den Schlössern nach dem gattungsbildenden Stand der Technik seinen ID-Geber in das Zündschloss einführen und in dem Zündschloss bewegen kann, werden die Schaltfunktionen nicht ausgelöst, da der ID-Geber nicht korrekt in dem ID-Geber-Aufnahmeelement verrastet werden kann. Diese Ursache erkennt der Nutzer jedoch in der Regel nicht. Bei dem erfindungsgemäßen Zündschloss kann hingegen nach einem Fehlgebrauch in jedem Fall der ID-Geber wieder korrekt in das Zündschloss eingeführt werden. Bei einer anschließenden vorschriftsmäßigen Benutzung wird das ID-Geber-Aufnahmeelement mit dem ID-Geber wieder in die Grundstellung zurückziehen, so dass die nächste Verwendung des Schlosses in der ursprünglich vorgesehenen Weise erfolgen kann. Das Zündschloss kann somit immer ohne professionelle Hilfe wieder in einen fehlerfreien Zustand versetzt werden. Dieses geschieht für den Nutzer weitestgehend transparent, d.h., die Tatsache, dass der ID-Geber nicht in der Grundstellung in dem ID-Geber-Aufnahmeelement verrastet wird, wird durch den Nutzer in der Regel nicht wahrgenommen. Die Gefahr eines versehentlichen Entfernens des ID-Gebers aus seiner verrasteten Stellung wird durch die erfindungsgemäße Lösung nicht erhöht. Eine entgegen der Einführrichtung gerichtete Kraft auf den ID-Geber wird zunächst den ID-Geber in seine Grundstellung zurückgezogen, bevor die Neigung des mindestens einen Rastschiebers einsetzt, aus dem ID-Geber-Aufnahmeelement herauszudrängen.

Es hat sich als vorteilhaft herausgestellt, wenn das ID-Geber-Aufnahnieelement nach einer Fehlbedienung gegen den Widerstand eines Vorspannelement bewegt werden muss, wenn das ID-Gebe.r-Aufnahmeelement in die ausgezeichnete ausgelenkte Stellung gelangt, an der der mindestens eine Rastschieber in die weitere Rastaussparung eintreten kann. Hierdurch, ist gewährleistet, dass durch ID-Geber eine gewisse Kraft auf den mindestens einen Rastschieber ausgeübt wird, so dass der mindestens eine Rastschieber das Bestreben hat, aus dem ID-Geber-Aufnahmeelement herauszudrängen. Hierdurch wird sicher gestellt, dass der mindestens eine Rastschieber sich in die weitere Rastaussparung eingreift und der ID-Geber in dem ID-Geber-Aufnahmeelement sicher verrastet wird, sobald der ID-Geber die ausgezeichnete ausgelenkte Stellung erreicht. Daher sieht eine bevorzugte Ausführungsform vor, dass das ID-Geber-Aufnahmeelement mit einem Vorspannelement gekoppelt ist und der Auslenkungsbereich einen Vorspannbereich umfasst, wobei das Vorspannelement bei einer Bewegung des ID-Geber-Aufnahmeelements in den Vorspannbereich entlang einer Einführrichtung vorgespannt wird und eine Kraft auf das ID-Geber-Aufnahmeelement ausübt, die der Bewegung des ID-Geber-Aufnahmeelements entlang der Einführrichtung in den Vorspannbereich entgegenwirkt, wobei die weitere Rastaussparung so angeordnet ist, dass sich das ID-Geber-Aufnahmeelement in dem Vorspannbereich befindet, wenn ein Eingreifen des mindestens einen Rastschiebers in die weitere Rastaussparung möglich ist.

Bei einer weiteren Ausführungsform eines Zündschlosses ist vorgesehen, dass die weitere Rastaussparung so angeordnet ist, dass sich das ID-Geber-Aufnahmeelement in dem Vorspannbereich in der Nähe einer maximal möglichen Auslenkung aus der Grundstellung befindet, wenn ein Eingreifen des mindestens einen Rastschiebers in die weitere Rastaussparung zum Aufnehmen des ID-Gebers möglich ist. Bei dieser Anordnung ist die dem Einführen des ID-Gebers entgegenwirkende Kraft des Vorspannelements nahezu maximal, wenn es sich bei dem Vorspannelement um eine Feder handelt. Ein weiterer Vorteil besteht darin, dass ein versehentliches Entfernen des korrekt verrasteten ID-Gebers weiter erschwert wird, weil das Aufnahmeelement durch das Vorspannungselement beschleunigt wird, sobald eine Abzugskraft auf den ID-Geber wirkt. Ein Eingreifen des mindestens einen Rastschiebers in die weitere Rastaussparung wird bei einer Bewegung des Aufnahmeelements, wenn der Rastschieber nicht bereits aufgrund einer hohen Abzugskraft ständig gegen die Seitenwand drückt, deutlich erschwert oder ist sogar unmöglich.

Eine vorteilhafte Ausführungsform der Erfindung sieht vor, dass in dem Auslenkungsbereich Schaltstellungen existieren, die eine S-Kontakt-Stellung und/oder eine Klemme-15-Stellung und/oder eine Klemme-50-Stellung und/oder eine Klemme-50-Stellung umfassen, und den Schaltstellungen zugeordnete Kontakte beim Erreichen und/oder Verlassen und/oder Passieren der Schaltstellungen durch das ID-Geber-Aufnahmeelement geschlossen und/oder geöffnet werden, wobei eine ID-Erfassungseinheit zum Erfassen einer Kennung des ID-Gebers vorgesehen ist, wenn der ID-Geber die Zugehörigkeit erster Art zu dem ID-Geber-Aufnahmeelement aufweist und in dem ID-Geber-Aufnahmeelement verrastet ist, und eine Verarbeitungseinheit vorgesehen ist, die eine Zugehörigkeit zweiter Art des ID-Gebers zu dem ID-Geber-Aufnahmeelement anhand der Kennung überprüft, so dass ein Ausführen von Fahrzeugfunktionen infolge des Schließens und/oder Öffnens beim Erreichen und/oder Verlassen und/oder Passieren der Schaltstellungen durch das ID-Geber-Aufnahmeelement blockierbar ist, wenn der ID-Geber die Zugehörigkeit zweiter Art nicht aufweist. Unter einem Ausführen einer Fahrzeugfunktion wird beispielsweise ein Einschalten einer Spannungsversorgung für alle elektrischen Verbraucher beim Schließen der Klemme-15 verstanden. Das Blockieren kann erfolgen, indem beispielsweise ein Freigabesignal bei einer Zugehörigkeit zweiter Art zur Verfügung gestellt wird, das von den elektrischen Verbrauchern ausgewertet wird. Das Blockieren kann aber auch mittels zusätzlicher Schaltelemente erfolgen, die mit den Schaltkontakten der einzelnen Schaltstellungen jeweils in Reihe geschaltet sind und nur bei einer Zugehörigkeit zweiter Art des ID-Gebers zu dem ID-Geber-Aufnahmeelement geschlossen werden.

Um eine möglichst vollständige Transparenz des "Selbstheilungsvorgangs" nach einer Fehlbedienung zu erreichen, ist es vorteilhaft, wenn das Verrasten des ID-Gebers möglichst in einer ausgelenkten Stellung erfolgt, bei der der Nutzer noch keine "Reaktion" infolge des Erreichens einer oder mehrerer Schaltstellungen erwartet. Eine Ausführungsform sieht daher vor, dass die ausgezeichnete ausgelenkte Stellung zwischen der Grundstellung und der S-Kontakt-Stellung oder zwischen den Schaltstellungen S-Kontakt-Stellung und Klemme-15-Stellung oder zwischen den Schaltstellungen Klemme-15-Stellung und Klemme-50-Stellung oder zwischen den Schaltstellungen Klemme-50-Stellung und Klemme-15-Fahrt-Stellung angeordnet ist.

Bei einer besonders bevorzugten Weiterbildung der Erfindung umfasst das ID-Geber-Aufnahmeelement zusätzlich einen Sperrschieber, der in der Gründstellung des ID-Geber-Aufnahmeelements in eine Sperraussparung des Gehäuses eingreift, sofern der eine Zughörigkeit erster Art aufweisende ID-Geber mittels des mindestens einen Rastschiebers in dem ID-Geber-Aufnahmeelement nicht verrastet ist und so ein Auslenken des ID-Geber-Aufnahmeelements aus der Grundstellung verhindert. Hierdurch wird sichergestellt, dass das Aufnahmeelement in der Grundstellung beim Einführen des ID-Gebers sicher verharrt.

Bei Zündschlössern nach dem Stand der Technik, die ebenenfalls einen Sperrschieber aufweisen, hat es sich gezeigt, dass diese nicht manipulationssicher sind. Bei einem gezielten Verkanten des ID-Geber-Aufnahmeelements ist es bei manchen Ausführungsformen möglich, den Sperrschieber gegen eine erste Sperrkontur zu verklemmen, so dass bei einer geeigneten Manipulation des mindestens einen Rastschiebers unter Aufrechthaltung der Verkantung ein Bewegen des ID-Geber-Aufnahmeelements in den Auslenkungsbereich möglich ist. Um diese Manipulation unmöglich zu machen, wird vorgeschlagen, dass die Sperraussparung und Sperrschieber so auszugestalten sind, dass bei einem Verkanten des ID-Geber-Aufnahmeelements in dem Gehäuse in der Grundstellung der Sperrschieber nicht in eine nicht in die Sperraussparung eingreifende Stellung verklemmt werden kann.

Dieses ist unter anderem nicht erfindungsgemäß dadurch möglich, dass in dem Gehäuse eine zweite Sperrkontur ausgebildet ist, in die der Sperrschieber eingreift und eine Bewegung des ID-Geber-Aufnahmeelements in die ausgelenkten Stellungen verhindert, wenn das ID-Geber-Aufnahmeelement in dem Gehäuse in der Grundstellung verkantet ist und der Sperrschieber gegen eine erste Sperrkontur, die in der Sperraussparung ausgebildet ist, verklemmt ist, wobei eine Wechselwirkung des Sperrschiebers mit der ersten Sperrkontur eine Bewegung des ID-Geber-Aufnahmeelements aus der Grundstellung in einem nicht verkanteten Zustand des ID-Geber-Aufnahmeelements verhindert.

Die Erfindung wird nachfolgend anhand bevorzugter Ausführungsbeispiele unter Bezugnahme auf eine Zeichnung näher erläutert. Die Figuren zeigen:
- Fig. 1: eine untere Gehäuseschale eines nicht erfindungsgemäßen elektronischen Zündschlosses,
- Fig. 2: eine andere untere Gehäuseschale eines elektronischen Zündschlosses und eines darin aufgenommen ID-Geber-Aufnahmeelements;
- Fig. 3: schematische Darstellung eines ID-Gebers; und
- Fig. 4: einen Ausschnitt der Gehäuseschale nach Fig. 2, bei der eine Rastschieberanordnung ohne das umgebende ID-Geber-Aufnahmeelement in der ausgezeichneten ausgelenkten Stellung dargestellt ist; und
- Fig. 5: eine Draufsicht auf ein in einer Gehäuseschale verkantetes ID-Geber-Aufnahmeelement.

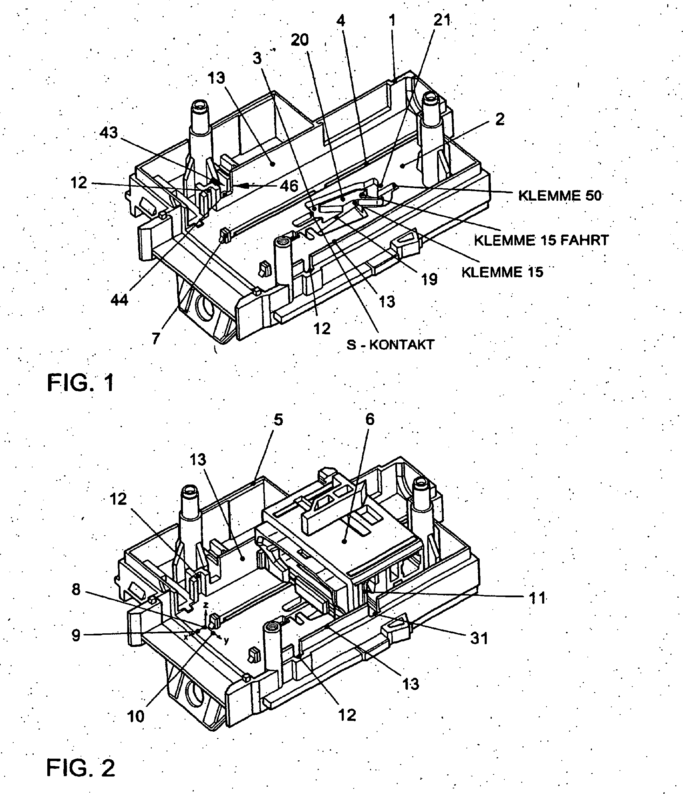

In Fig. 1 ist eine untere Gehäuseschale 1 eines nicht erfindungsgemäßen elektronischen Zündschlosses dargestellt. In einem Boden 2 der Gehäuseschale 1 ist eine Führungskontur 3 als Vertiefung oder Durchbruch ausgebildet. In dem Boden 2 ist ferner eine Führungsnut 4 vorhanden. In der Gehäuseschale 1 kann ein ID-Geber-Aufnahmeelement aufgenommen werden.

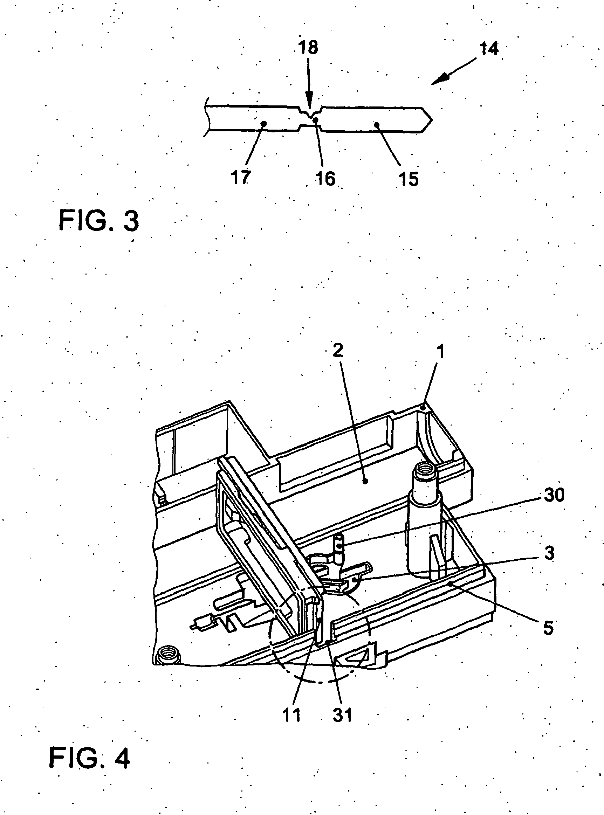

In Fig. 2 ist eine weitere Gehäuseschale 5 ähnlich zu der von Fig. 1 dargestellt. Gleiche technische Merkmale sind mit identischen Bezugszeichen versehen. In der weiteren Gehäuseschale 5 ist ein als ID-Geber-Aufnahmeschlitten 6 ausgebildetes ID-Geber-Aufnahmeelement aufgenommen, das mittels einer Führungsnut 4 geführt wird. Ein Anschlag 7 ist ein einem Ende der Führungsnut 4 gebildet. An dem Anschlag 7 ist ein rechtshändiges Koordinatensystem 8 abgebildet, um eine Beschreibung zu erleichtern. Wird der ID-Geber-Aufnahmeschlitten 6 entlang einer durch eine x-Achse 9 des Koordinatensystems 8 vorgegebene Richtung bis an den Anschlag 7 bewegt, so befindet sich der ID-Geber-Aufnahmeschlitten 6 in einer Grundstellung; die auch als Vorraststellung bezeichnet wird. In dieser Stellung können Rastschieber 11 in Vorrastaussparungen 12 von Seitenwänden 13 der weiteren unteren Gehäuseschale 5 ausweichen, um so einen ID-Geber, ähnlich zu einem ID-Geber 14 gemäß Fig. 3, aufzunehmen.

In Fig. 3 ist ein Abschnitt eines ID-Gebers 14 schematisch dargestellt. Der ID-Geber 14 gemäß Fig. 3. weist einen vorderen Teil 15, einen mittleren Teil 16 und einen hinteren Teil 17 auf. Der mittlere Teil 16 ist gegenüber dem vorderen Teil 15 und dem hinteren Teil 17 verjüngt. Der mittlere Teil 16 weist eine Kontur 18 auf, die komplementär zu Konturabschnitten ist, die in den Rastschiebern 11 ausgebildet sind. Wir der ID-Geber 16 in den in der Vorraststellung befindlichen ID-Geber-Aufnahmeschlitten 6 in negativer x-Richtung eingeführt, so werden die Rastschieber 11 entlang oder entgegen einer durch eine y-Achse 10 vorgegebenen Richtung in die Vorrastaussparungen 12 der Seitenwände 13 gedrängt. Passen die Konturabschnitte der Rastschieber 11 zu der Kontur .18 des ID-Gebers 14, so kehren die Rastschieber 11 in ihre Ausgangsstellung zurück. In dieser Ausgangsstellung der Rastschieber 11 ist der ID-Geber 14 in dem ID-Geber-Aufnahmeschlitten 6 verrastet, wenn der ID-Geber 14 eine Zugehörigkeit erster Art zu dem Zündschloss bzw. dem ID-Geber-Aufnahmeschlitten 6 aufweist. Wird der ID-Geber 14 weiter in negativer X-Richtung bewegt, so wird der ID-Geber-Aufnahmeschlitten 6 aus der Grundstellung, in eine ausgelenkte Stellung bewegt. Der ID-Geber-Aufnahmeschlitten ist vorzugsweise so ausgestaltet, dass auf die Rastschieber 11 im korrekt verrasteten Zustand des ID-Gebers beim weiteren Einführen des ID-Gebers in das Zündschloss keine Kräfte wirken, die die Rastschieber auseinander drängen. In der ausgelenkten Stellung werden die Rastschieber 11 außerdem durch die Seitenwände 13 daran gehindert, auseinander zu weichen und den ID-Geber 13 freizugeben.

An der nicht sichtbaren Unterseite des ID-Geber-Aufnahmeschlittens 6 ist ein Stift (nicht dargestellt) befestigt, der in die Führungskontur 3 im Boden 2 der unteren Gehäuseschale 1 eingreift und entlang der y-Richtung im ID-Geber-Aufnahmeschlitten 6 relativ zu diesem beweglich gelagert ist. Der Stift ist auf eine Mittelposition entlang der y-Richtung, vorgespannt. Die Wechselwirkung des Stifts mit der Führungskontur 3 legt fest, welche Stellungen entlang der x-Richtung der ID-Geber-Aufnahmeschlitten 6 in Abfolge einnehmen kann.

In Fig. 1 sind an der Führungskontur 3 die entsprechenden Stellungen eingezeichnet. Zunächst wird der so genannte S-Kontakt geschlossen. In dieser Stellung "S-Kontakt-Stellung" wird beispielsweise eine Lenksäulenverriegelung entriegelt. Wird der ID-Geber 14 tiefer in das Zündschloss in negativer x-Richtung bewegt, so wird ein nicht dargestelltes Vorspannelement gespannt, das vorzugsweise als Druckfeder ausgebildet ist. Mit dieser Bewegung gelangt der ID-Geber-Aufnahmeschlitten 6 in die Stellung "Klemme-15-Stellung", d.h., die Klemme 15 wird geschlossen. Dieses bedeutet, dass eine Zündung des Kraftfahrzeugs aktiviert wird. Kurz bevor die Klemme-15-Stellung erreicht wird, eine separat ausgeführte, nicht dargestellte ID-Geber-Abzugssperre aktiviert. In der Klemme-15-Stellung wird der ID-Geber-Aufnahmeschlitten 6 mittels einer kleinen Blattfeder 19 in der Führungskontur 3 gehalten. Aus der Klemme-15-Stellung kann der ID-Geber-Aufnahmeschlitten 6 in die S-Kontakt-Stellung zurückgezogen werden oder in die Stellung "Klemme-50-Stellung" bewegt werden, in der ein Antriebssystem des Kraftfahrzeugs aktiviert wird. Mittels einer Feder (nicht dargestellt) wird der ID-Geber-Aufnahmeschlitten 6 nach dem Loslassen des ID-Gebers 14 in eine Stellung "Klemme-15-Fahrt-Stellung" bewegt. Ein Zentralteil 20 der Führungskontur 3 verhindert im Zusammenwirken mit dem Stift, dass der ID-Geber-Aufnahmeschlitten 6 in eine andere Stellung bewegt werden kann.

Wird der ID-Geber erneut mit einem Kraftimpuls in negativer x-Richtung in das Zündschloss gedruckt, so verhindert eine Nase 21 im Zusammenwirken mit dem Stift, dass die Klemme-50-Stellung erneut erreicht wird: Stattdessen wird der ID-Geber 14 mit dem ID-Geber-Aufnahmeschlitten 6 mittels der Feder nach dem Loslassen des ID-Gebers 14 in die S-Kontakt-Stellung zurückbewegt. Aus dieser Stellung kann der ID-Geber-Aufnahmeschlitten 6 nur mittels einer Zugkraft entlang der positiven x-Richtung mit dem ID-Geber 14 in die Grundstellung zurückbewegt werden.

Diese Bewegung ist jedoch nur möglich, sofern die oben erwähnte ID-Geber-Abzugssperrev nicht aktiv ist, das heißt, ein Sperrriegel der ID-Geber-Abzugssperre sich nicht in der sperrenden Stellung befindet.

In Fig. 4 ist ein Ausschnitt der weiteren unteren Gehäuseschale 5 und der Rastschieber 11 nach Fig. 2 ohne den zugehörigen ID-Geber-Aufnahmeschlitten dargestellt. Ferner ist der oben erwähnte Stift, der mit dem Bezugszeichen 30 gekennzeichnet ist, in der Führungskontur 3 dargestellt. Im Gegensatz zu der in Fig. 1 dargestellten unteren Gehäuseschale 1, die im Hinblick auf eine Verrastbarkeit des ID-Gebers nach einem Fehlgebrauch des Zündschlosses eine Ausführungsform nach dem Stand der Technik darstellt, weist die weitere Gehäuseschale 5 nach Fig. 2 und 4 weitere Rastaussparungen 31 auf, von denen nur eine zu erkennen ist. In diese weiteren Rastaussparungen 31 können die Rastschieber 11 eingreifen, um den ID-Geber zu verrasten, wenn sich der ID-Geber-Aufnahmeschlitten 6 nach einem Fehlgebrauch vor dem Einführen des ID-Gebers nicht in der Grundstellung befand.

Bei der in Fig. 2 und 4 dargestellten Ausführungsform befinden sich die Rastschieber 11 bzw. der ID-Geber-Aufnahmeschlitten 6 in der ausgezeichneten ausgelenkten Stellung, in der die Rastschieber 11 des ID-Geber-Aufnahmeschlittens 6 in die weiteren Rastaussparungen 31 eingreifen können, um den ID-Geber nach einem Fehlgebrauch aufzunehmen. Die weiteren _ Rastaussparungen sind so angeordnet, dass sich der ID-Geber-Aufnahmeschlitten 6 zwischen den Schaltstellungen Klemme-50-Stellung und der Klemme-15-Fahrt-Stellung befindet, wenn er sich in der ausgezeichneten ausgelenkten Stellung befindet. Andere Anordnungen können bei anderen Ausführungsformen gewählt werden.

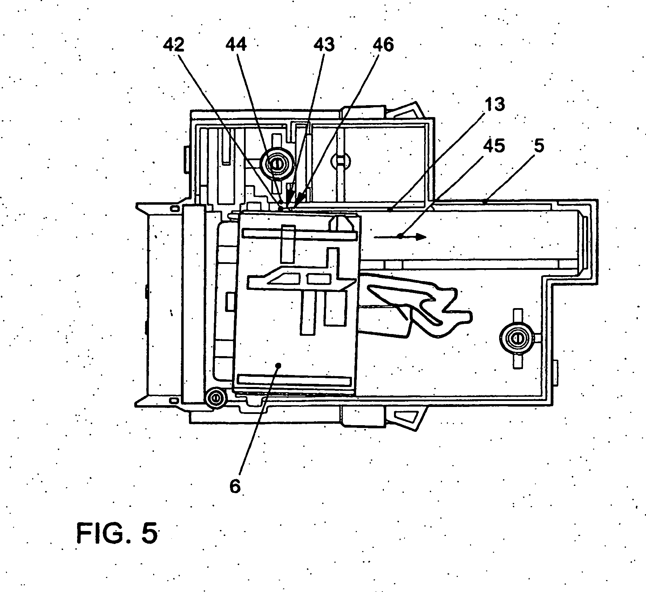

In Fig. 5 ist eine Draufsicht auf einen in der weiteren Gehäuseschale 5 verkanteten ID-Geber-Aufnahmeschlitten 6 dargestellt. Ein Sperrschieber 42 ist gegen eine erste Sperrkontur 43 einer Sperrschieberaussparung 44 einer Seitenwand 13 der weiteren Gehäuseschale 5 verklemmt. Werden in dieser Stellung die Rastschieber 11 bei einer Aufrechterhaltung der Verkantung bzw. Verklemmung so manipuliert, dass sie nicht Vorrastaussparungen 12 eingreifen, kann der ID-Geber-Aufnahmeschlitten 6 entlang der Einführrichtung eines ID-Gebers, die mittels eines Pfeils 45 angedeutet ist, aus der Grundstellung in den Auslenkungsbereich bewegt werden.

Bei der in Fig. 1 dargestellten nicht erfindungsgemäßen unteren Gehäuseschale 1 ist die Sperrschieberaussparung so ausgestaltet, dass zusätzlich zu der ersten Sperrkontur 43, mit der der Sperrschieber 42 in einer nicht verkanteten Stellung des ID-Geber-Aufnahmeschlittens wechselwirkt, eine zweite Sperrkontur 46 vorgesehen ist, in die der Sperrschieber eingreift, wenn der ID-Geber-Aufnahmeschlitten in der Gehäuseschale 1 in der Grundstellung verkantet ist und der Sperrschieber gegen eine erste Sperrkontur, ähnlich wie in Fig. 5, verklemmt ist. Eine Bewegung des ID-Geber-Aufnahmeschlittens in die ausgelenkten Stellungen wird so zuverlässig verhindert.

In Fig. 1 und 2 bzw. 4 sind untere Gehäuseschalen gezeigt, die entweder weitere Rastaussparungen 31 (Fig. 2 und 4) oder eine erste und zweite Sperrkontur (Fig. 1) aufweisen. Selbstverständlich sind Zündschlösser möglich, die sowohl weitere Rastaussparungen als auch eine erste und eine zweite Sperrkontur umfassen.

### Bezugszeichenliste

- 1: Gehäuseschale.
- 2: Boden
- 3: Führungskontur
- 4: Führungsnut
- 5: weitere Gehäuseschale
- 6: ID-Geber-Aufnahmeschlitten
- 7: Anschlag
- 8: Koordinatensystem
- 9: x-Achse
- 10: y-Achse
- 11: Rastschieber
- 12: Vorrastaussparung
- 13: Seitenwände
- 14: ID-Geber
- 15: vorderes Teil des ID-Gebers
- 16: mittleres Teil des ID-Gebers
- 17: hinteres Teil des ID-Gebers
- 18: Kontur des ID-Gebers
- 19: Blattfeder
- 20: Zentralteil der Führungskontur
- 21: Nase
- 30: Stift
- 31: weitere Rastaussparungen
- 42: Sperrschieber
- 43: erste Sperrkontur
- 44: Sperrschieberaussparung.
- 45: Pfeil, der eine Einführrichtung eines ID-Gebers andeutet.
- 46: zweite Sperrkontur

## Patentansprüche

1. Zündschloss mit einem ID-Geber-Aufnahmeelement (6),
- das in einem Gehäuse beweglich angeordnet ist und mindestens einen Rastschieber (11) am ID-Geber-Aufnahmeelement (6) umfasst,
- wobei das Gehäuse mindestens eine Vorrastaussparung (12) umfasst, die so angeordnet ist, dass der mindestens eine Rastschieber in einer Grundstellung des ID-Geber-Aufnahmeelements (6) in dem Gehäuse beim Aufnehmen eines ID-Gebers(14) zumindest teilweise in die mindestens eine Vorrastaussparung (12) des Gehäuses eingreift,
- so dass der Rastschieber (11) in die Vorrastaussparung (12) gedrängt wird,
- und bei einer Zugehörigkeit erster Art des ID-Gebers (14) zu dem ID-Geber-Aufnahmeelement (6) der ID-Geber (14) mit dem ID-Geber-Aufnahmeelement (6) verrastbar ist, so dass das ID-Geber-Aufnahmeelement (6) mit dem aufgenommenen ID-Geber (14) aus der Grundstellung in auslenkende Stellungen innerhalb eines Auslenkungsbereiches bewegbar ist,
- wobei das ID-Geber-Aufnahmeelement (6) den ID-Geber (14) in den auslenkenden Stellungen nicht freigibt,
**dadurch gekennzeichnet, dass**
- in dem Gehäuse mindestens eine weitere Rastaussparung (31) vorgesehen ist,
- so dass der mindestens eine Rastschieber (11) in einer ausgezeichneten ausgelenkten Stellung des ID-Geber-Aufnahmeelements (6) innerhalb des Auslenkungsbereiches zum Aufnehmen des ID-Gebers (14) in die mindestens eine weitere Rastaussparung (31) zumindest teilweise eingreifen kann.

2. Zündschloss nach Anspruch 1, **dadurch gekennzeichnet, dass** das ID-Geber-Aufnahmeelement mit einem Vorspannelement gekoppelt ist und der Auslenkungsbereich einen Vorspannbereich umfasst, wobei das Vorspannelement bei einer Bewegung des ID-Geber-Aufnahmeelements in den Vorspannbereich entlang einer Einführrichtung vorgespannt wird und eine Kraft auf das ID-Geber-Aufnahmeelement ausübt, die der Bewegung des ID-Geber-Aufnahmeelements entlang der Einführrichtung in den Vorspannbereich entgegenwirkt, wobei die weitere Rastaussparung (31) so angeordnet ist, dass sich das ID-Geber-Aufnahmeelement in dem Vorspannbereich befindet, wenn ein Eingreifen des mindestens einen Rastschiebers (11) in die weitere Rastaussparung (31) möglich ist.

3. Zündschloss nach Anspruch 1 oder 2, **dadurch gekennzeichnet, dass** die weitere Rastaussparung (31) so angeordnet Ist, dass sich das ID-Geber-Aufnahmeelement in dem Vorspannbereich in der Nähe einer maximal möglichen Auslenkung aus der Grundstellung befindet, wenn ein Eingreifen des mindestens einen Rastschiebers (11) in die weitere Rastaussparung (31) zum Aufnehmen des ID-Gebers möglich ist.

4. Zündschloss nach einem der vorangehenden Ansprüche, **dadurch gekennzeichnet, dass** in dem Auslenkungsbereich Schaltstellungen existieren, die eine S-Kontakt-Stellung und/oder eine Klemme-15-Stellung und/oder eine Klemme-50-Stellung und/oder eine Klemme-15-Fahrt-Stellung umfassen und den Schaltstellungen zugeordnete Kontakte beim Erreichen und/oder Verlassen und/oder Passieren der Schaltstellungen durch das ID-Geber-Aufnahmeelement geschlossen und/oder geöffnet werden, wobei eine ID-Erfassungseinheit zum Erfassen einer Kennung des ID-Gebers vorgesehen ist, wenn der ID-Geber die Zugehörigkeit erster Art zu dem ID-Geber-Aufnahmeelement aufweist und In dem ID-Geber-Aufnahmselement verrastet Ist, und eine Verarbeitungseinheit vorgesehen ist, die eine Zugehörigkeit zweiter Art des ID-Gebers zu dem ID-Geber-Aufnahmeelement anhand der Kennung überprüft, so dass ein Ausführen von Fahrzeugfunktionen infolge des Schließens und/oder Öffnens beim Erreichen und/oder Verlassen und/oder Passieren der Schaltstellungen durch das ID-Geber-Aufnahmeelement blockierbar ist, wenn der ID-Geber die Zugehörigkeit zweiter Art nicht aufweist.

5. Zündschloss nach Anspruch 4, **dadurch gekennzeichnet, dass** die ausgezeichnete ausgelenkte Stellung zwischen der Grundstellung und der S-Kontaktstellung oder zwischen den Schaltstellungen S-Kontakt-Stellung und Klemme-15-Stellung oder zwischen den Schaltstellungen Klemme-15-Stellung und Klemme-50-Stellung oder zwischen den Schaltstellungen Klemme-50-Stellung und Klemme-15-Fahrt-Stellung angeordnet ist.

6. Zündschloss nach einem der vorangehenden Ansprüche, **dadurch gekennzeichnet, dass** das ID-Geber-Aufnahmeelement zusätzlich einen Sperrschleber (42) umfasst, der in der Grundstellung des ID-Geber-Aufnahmeelements in eine Sperraussparung (44) des Gehäuses eingreift, sofern der eine Zughörigkeit erster Art aufweisende ID-Geber (14) mittels des mindestens einen Rastschiebers (11) in dem ID-Geber-Aufnahmeelement nicht verrastet ist und so ein Auslenken des ID-Geber-Aufnahmeelements aus der Grundstellung verhindert.

7. Zündschloss nach Anspruch 6, **dadurch gekennzeichnet, dass** in dem Gehäuse eine zweite Sperrkontur (46) ausgebildet ist, in die der Sperrschieber (42) eingreift und eine Bewegung des ID-Geber-Aufnahmeelements in die ausgelenkten Stellungen verhindert, wenn das ID-Geber-Aufnahmeelement in dem Gehäuse in der Grundstellung verkantet ist und der Sperrschieber (42) gegen eine erste Sperrkontur (43), die in der Sperraussparung (44) ausgebildet ist, verklemmt ist, wobei sich der Sperrschieber (42) mit der ersten Sperrkontur (43) in Eingriff befindet, sofern der eine Zugehörigkeit erster Art aufweisende ID-Geber mittels des mindestens einen Rastschiebers in dem ID-Geber-Aufnahmeelement nicht verrastet ist und so eine Bewegung des ID-Geber-Aufnahmeelements aus der Grundstellung in einem nicht verkanteten Zustand des ID-Geber-Aufnahmeelements verhindert.

## Claims

1. Ignition lock having an ID transmitter receptacle element (6),
- which is movably arranged in a housing and comprises at least one latching slide (11) on the ID transmitter receptacle element (6),
- wherein the housing comprises at least one pre-latching recess (12) which is arranged in such a way that the at least one latching slide at least partially engages in the at least one pre-latching recess (12) in the housing in a basic position of the ID transmitter receptacle element (6) in the housing when an ID transmitter (14) is being held,
- so that the latching slide (11) is forced into the pre-latching recess (12),
- and, when the ID transmitter (14) has a relationship of a first type with the ID transmitter receptacle element (6), the ID transmitter (14) can be latched to the ID transmitter receptacle element (6) so that the ID transmitter receptacle element (6) can be moved with the held ID transmitter (14) out of the basic position into deflecting positions within a deflection region,
- wherein the ID transmitter receptacle element (6) does not release the ID transmitter (14) in the deflecting positions,
**characterized in that**
- at least one further latching recess (31) is provided in the housing,
- so that the at least one latching slide (11) can at least partially engage in the at least one further latching recess (31) in an indicated, deflected position of the ID transmitter receptacle element (6) within the deflection range in order to hold the ID transmitter (14).

2. Ignition lock according to Claim 1, **characterized in that** the ID transmitter receptacle element is coupled to a pretensioning element, and the deflection region comprises a pretensioning region, wherein the pretensioning element is pretensioned in an insertion direction when the ID transmitter receptacle element moves into the pretensioning region, and said pretensioning element applies a force to the ID transmitter receptacle element which counteracts the movement of the ID transmitter receptacle element in the insertion direction into the pretensioning region, wherein the further latching recess (31) is arranged in such a way that the ID transmitter receptacle element is located in the pretensioning region if it is possible for the at least one latching slide (11) to engage in the further latching recess (31).

3. Ignition lock according to Claim 1 or 2,
**characterized in that** the further latching recess (31) is arranged in such a way that the ID transmitter receptacle element is located in the pretensioning region in the vicinity of a maximum possible deflection out of the basic position if it is possible for the at least one latching slide (11) to engage in the further latching recess (31) in order to hold the ID transmitter.

4. Ignition lock according to one of the preceding claims, **characterized in that** in the deflection region there are switched positions which comprise an S contact position and/or a terminal 15 position and/or a terminal 50 position and/or a terminal 15 travel position, and contacts which are assigned to the switched positions are closed and/or opened when the ID transmitter receptacle element reaches and/or exits and/or passes the switched positions, wherein an ID detection unit for detecting an identifier of the ID transmitter is provided if the ID transmitter has a first type of relationship with the ID transmitter receptacle element and is latched in the ID transmitter receptacle element, and a processing unit is provided which checks for a second type of relationship of the ID transmitter with the ID transmitter receptacle element on the basis of the identifier, so that the execution of vehicle functions as a result of closing and/or opening when the ID transmitter receptacle element reaches and/or exits and/or passes the switched positions can be blocked if the ID transmitter does not have a second type of relationship.

5. Ignition lock according to Claim 4, **characterized in that** the indicated, deflected position is arranged between the basic position and the S contact position or between the switched positions of the S contact position and terminal 15 position or between the switched positions of the terminal 15 position and terminal 50 position or between the switched positions of the terminal 50 position and terminal 15 travel position.

6. Ignition lock according to one of the preceding claims, **characterized in that** the ID transmitter receptacle element additionally comprises a locking slide (42) which, in the basic position of the ID transmitter receptacle element, engages in a locking recess (44) in the housing if the ID transmitter (14) which has a relationship of the first type does not latch in the ID transmitter receptacle element by means of the at least one latching slide (11) and therefore prevents the ID transmitter receptacle element from being deflected from the basic position.

7. Ignition lock according to Claim 6, **characterized in that** a second locking contour (46) is formed in the housing, into which second locking contour (46) the locking slide (42) engages and prevents movement of the ID transmitter receptacle element into the deflected positions if the ID transmitter receptacle element is tilted in the basic position in the housing, and the locking slide (42) is clamped against a first locking contour (43) which is formed in the locking recess (44), wherein the locking slide (42) engages with the first locking contour (43) if the ID transmitter which has a relationship of the first type is not latched in the ID transmitter receptacle element by means of the at least one latching slide and therefore prevents movement of the ID transmitter receptacle element out of the basic position in a non-tilted state of the ID transmitter receptacle element.

## Revendications

1. Serrure de contact munie d'un élément d'accueil de codeur d' ID (6)
- laquelle est disposée dans un boîtier de manière mobile et comprend au moins un curseur à enclenchement (11) sur l'élément d'accueil de codeur d'ID (6),
- le boîtier comprenant au moins un évidement de pré-enclenchement (12) qui est disposé de telle sorte que l'au moins un curseur à enclenchement, lorsque l'élément d'accueil de codeur d'ID (6) se trouve dans une position de base dans le boîtier, vient en prise au moins partiellement dans l'au moins un évidement de pré-enclenchement (12) du boîtier lors de l'accueil d'un codeur d'ID (14),
- de sorte que le curseur à enclenchement (11) est comprimé dans l'évidement de pré-enclenchement (12),
- et lors d'une appartenance de premier ordre du codeur d'ID (14) à l'élément d'accueil de codeur d'ID (6), le codeur d'ID (14) peut s'enclencher avec l'élément d'accueil de codeur d'ID (6) de sorte que l'élément d'accueil de codeur d'ID (6) avec le codeur d'ID (14) accueilli puisse être déplacé de la position de base vers des positions déviées à l'intérieur d'une zone de déviation,
- l'élément d'accueil de codeur d'ID (6) ne libérant pas le codeur d'ID (14) dans les positions déviées,
**caractérisée en ce que**
- au moins un évidement d'enclenchement (31) supplémentaire est prévu dans le boîtier,
- de sorte que l'au moins un curseur à enclenchement (11), dans une position déviée marquée de l'élément d'accueil de codeur d'ID (6) à l'intérieur de la zone de déviation, puisse venir en prise au moins partiellement dans l'au moins un évidement d'enclenchement (31) supplémentaire en vue d'accueillir le codeur d'ID (14).

2. Serrure de contact selon la revendication 1, **caractérisée en ce que** l'élément d'accueil de codeur d'ID est couplé avec un élément de précontrainte et la zone de déviation comprend une zone de précontrainte, l'élément de précontrainte étant précontraint le long du sens d'introduction lors d'un mouvement de l'élément d'accueil de codeur d'ID dans la zone de précontrainte et exerçant une force sur l'élément d'accueil de codeur d'ID, laquelle s'oppose au mouvement de l'élément d'accueil de codeur d'ID le long du sens d'introduction dans la zone de précontrainte, l'évidement d'enclenchement (31) supplémentaire étant disposé de telle sorte que l'élément d'accueil de codeur d'ID se trouve dans la zone de précontrainte lorsqu'il est possible pour l'au moins un curseur à enclenchement (11) de venir en prise dans l'évidement d'enclenchement (31) supplémentaire.

3. Serrure de contact selon la revendication 1 ou 2, **caractérisée en ce que** l'évidement d'enclenchement (31) supplémentaire est disposé de telle sorte que l'élément d'accueil de codeur d'ID, dans la zone de précontrainte, se trouve à proximité d'une déviation maximale depuis la position de base lorsqu'il est possible pour l'au moins un curseur à enclenchement (11) de venir en prise dans l'évidement d'enclenchement (31) supplémentaire en vue d'accueillir le codeur d'ID.

4. Serrure de contact selon l'une des revendications précédentes, **caractérisée en ce qu'**il existe dans la zone de déviation des positions de commutation qui comprennent une position de contact S et/ou une position de borne 15 et/ou une position de borne 50 et/ou une position de borne 15 de déplacement et les contacts associés aux positions de commutation sont fermés et/ou ouverts lorsque l'élément d'accueil de codeur d'ID atteint et/ou quitte et/ou passe devant les positions de commutation, une unité de détection d'ID étant prévue pour détecter un identifiant du codeur d'ID lorsque le codeur d'ID présente l'appartenance de premier ordre à l'élément d'accueil de codeur d'ID et qu'il est enclenché dans l'élément d'accueil de codeur d'ID, et il est prévu une unité de traitement qui contrôle une appartenance de deuxième ordre du codeur d'ID à l'élément d'accueil de codeur d'ID au moyen de l'identifiant, de sorte qu'une exécution de fonctions du véhicule résultant de la fermeture et/ou de l'ouverture lorsque l'élément d'accueil de codeur d'ID atteint et/ou quitte et/ou passe devant les positions de commutation puisse être bloquée lorsque le codeur d'ID ne présente pas l'appartenance du deuxième ordre.

5. Serrure de contact selon la revendication 4, **caractérisée en ce que** la position déviée marquée se trouve entre la position de base et la position de contact S ou entre les positions de commutation position de contact S et position de borne 15 ou entre les positions de commutation position de borne 15 et position de borne 50 ou entre les positions de commutation position de borne 50 et position de borne 15 de déplacement.

6. Serrure de contact selon l'une des revendications précédentes, **caractérisée en ce que** l'élément d'accueil de codeur d'ID comprend en plus un curseur de blocage (42) qui, en position de base de l'élément d'accueil de codeur d'ID, vient en prise dans un évidement de blocage (44) du boîtier, sous réserve que le codeur d'ID (14) qui présente une appartenance de premier ordre n'est pas enclenché dans l'élément d'accueil de codeur d'ID au moyen de l'au moins un curseur d'enclenchement (11) et empêche ainsi une déviation de l'élément d'accueil de codeur d'ID hors de la position de base.

7. Serrure de contact selon la revendication 6, **caractérisée en ce qu'**un deuxième profil de blocage (46) est façonné dans le boîtier, dans lequel le curseur de blocage. (42) vient en prise et lequel empêche un mouvement de l'élément d'accueil de codeur d'ID dans les positions déviées lorsque l'élément d'accueil de codeur d'ID est coincé dans le boîtier en position de base et le curseur de blocage (42) est coincé contre un premier profil de blocage (43) qui est façonné dans l'évidement de blocage (44), le curseur de blocage (42) se trouvant en prise avec le premier profil de blocage (43), sous réserve que le codeur d'ID qui présente une appartenance de premier ordre n'est pas enclenché et empêche ainsi un mouvement de l'élément d'accueil de codeur d'ID hors de la position de base dans un état non enclenché de l'élément d'accueil de codeur d'ID.
